# EUROPÄISCHE PATENTANMELDUNG

(11) **EP 0 551 103 A1**
(43) Veröffentlichungstag der Anmeldung: **14.07.1993**
(21) Anmeldenummer: 93100103.6
(22) Anmeldetag: 07.01.1993
(51) Int. Cl.: F24F 3/16

(54) **Lüftungskanal mit Faltfilter**

(30) Priorität: 10.01.1992 DE 4200398
(71) Anmelder: Hölter, Heinz, Prof. Dr. Sc., Dr.-Ing., D-45964 Gladbeck (DE)
(72) Erfinder: Hölter, Heinz, Prof. Dr. Sc., Dr.-Ing., D-45964 Gladbeck (DE)
(74) Vertreter: Spalthoff, Adolf, Dipl.-Ing.

(57) **Zusammenfassung**

Bei einem Verfahren zur bakteriziden und fungiziden Ausgestaltung von Lüftungskanälen werden die Lüftungskanäle mit einer bakteriziden und fungiziden Faltfolie versehen, die durch die Lüftungskanäle oder Abschnitte derselben durchgezogen und dann aufgebläht bzw. aufgeweitet wird. Auf der Außenfläche der Faltfolien sind Maßnahmen getroffen, mittels denen eine Haftung zwischen der Außenfläche der Faltfolie und der Innenwandung der Lüftungskanäle errreicht wird.

## Beschreibung

Es ist bekannt, daß in Luftzuführungskanälen, insbesondere in Klimaanlagen, Pilze und Bakterien sich ansammeln und eine Belastung für den Menschen bedeuten.

Insbesondere betroffen sind Allergiker.

Es ist bereits vorgeschlagen worden, im Auslaß der Belüftungskanäle Filter einzubauen.

Das ist ein Vorteil, um dafür Sorge zu tragen, daß die sich lösenden Allergene in den Filtern festgehalten werden.

Diese Pilz- und Bakterienansammlungen werden teilweise derart stark, daß die Filter sehr rasch inaktiv werden, da das Weiterwachsen der Pilzkolonien und der Bakterienkolonien in den Kanälen und Rohrleitungen selbst durch endständige Filter nicht verhindert werden.

Hier setzt der erfindungsgemäße Gedanke ein.

Es ist bekannt, Kanäle zu reinigen mit mechanischen Vorrichtungen. Es ist auch bekannt, diese Kanäle mit Waschmitteln zu versehen.

Aber alles das sind nur kurzfristige Lösungen, und dann ist der Kanal wieder belastet.

Um eine dauerhafte bakterizide und fungizide Armierung dieser Kanäle zu erzielen, wird erfindungsgemäß vorgeschlagen, eine bakterizide Metallfolie in Faltform in die Kanäle einzuführen und durch Druckluft an die Außenwandungen anpreßbar zu gestalten, wobei diese Folien an der Außenwand haftende Eigenschaften aufweisen, die z.B. kurz vor Einbringen in den Kanal aufgetragen werden können.

Erfindungsgemäß wird weiterhin vorgeschlagen, daß diese vorgegebene Maßnahme dadurch unterstützt wird, indem bei vorzugsweise neuen Kanälen Röhrchen zur Vakuumerzeugung von außen anzubringen sind, um nach dem Eindrücken durch Druckluft der Metallfolie diese zusätzlich an die Wandungen der Kanäle anzusaugen, so daß auch in den kleinsten Ecken und Winkeln durch Vakuumbildung die etwas größer bemessene Innenfolie sich an die Außenwand lagert.

Selbstverständlich ist es zweckdienlich, daß die Kanäle mit bekannten Verfahren vorher gereinigt werden.

Selbstverständlich ist die Erfindung nicht auf die vorstehend beschriebene Einbringung und bakterizide Ausführung in Form einer Folie nur auf Metallbasis beschränkt, sondern es ist selbstverständlich auch denkbar, daß eine flammwidrige Kunststoffolie genommen wird, die mit fungiziden und bakteriziden z.B. Metallauflagen bestehend aus Messing- und/oder Silberlegierungen, auf der Innenseite aufgebracht wird und die sich dann durch den Überdruck an die Wandung der Kanäle anlagert.

Ein erfindungsgemäßer Lüftungskanal für Belüftungsanlagen hat eine Faltfolie. Diese Faltfolie kann auch nachträglich in Lüftungskanäle vorhandener Belüftungsanlagen eingebracht werden. Hierzu ist es zweckmäßig, den bereits vorher in Gebrauch befindlichen und mit der Faltfolie zu versehenden Belüftungskanal zu reinigen. Nach Reinigung des Lüftungskanals kann die im zusammengefalteten Zustand befindliche Faltfolie durch den gesamten Lüftungskanal oder durch Abschnitte desselben durchgezogen werden. Die hinsichtlich ihrer Querschnittsgröße an den Innenquerschnitt des Lüftungskanals angepaßte, jedoch noch im zusammengefalteten Zustand, bei der ihr Querschnitt wesentlich geringer als der vorgenannte Innenquerschnitt des Lüftungskanals ist, durch den Lüftungskanal durchgezogene Faltfolie wird nach Beendigung des Durchziehvorgangs durch Druckluftbeaufschlagung von innen aufgeweitet. Die Außenfläche der Faltfolie kann mit Haftmittel od.dgl. versehen werden. Dann ergibt sich bei der Aufweitung der Faltfolie durch z.B. Druckluftbeaufschlagung ein Anlagern der Außenfläche der Faltfolie an die Innenwandungsfläche des Lüftungskanals, so daß die Faltfolie mit ihrer Außenfläche an der Innenwandungsfläche des Lüftungskanals anhaftet. Um eine bakterizide oder fungizide Belastung der den Lüftungskanal durchströmenden Luftströme zu verringern bzw. zu vermeiden, ist die Faltfolie zumindest im Bereich ihrer Innenfläche bakterzizid und fungizid ausgestaltet.

Durch einen wie vorstehend erläutert ausgebildeten Lüftungskanal läßt sich die Qualität der die Belüftungsanlage durchströmenden Luft erheblich verbessern. Des weiteren wird eine Überlastung von zur Belüftungsanlage gehörenden Filtern erheblich verringert. Somit läßt sich über einen längeren Zeitraum als beim Stand der Technik eine beliebig vorgebbare Mindestqualität der von der Belüftungsanlage zur Verfügung gestellten Luft erreichen.

In zweckmäßiger Weise kann die Faltfolie als Metallfolie ausgebildet sein. Derartige Metallfolien sind in vergleichsweise einfacher Weise herstellbar und mit dem bereits geschilderten Verfahren ohne großen Aufwand in vorhandene Lüftungskanäle einbringbar.

Es ist auch möglich, die Faltfolie auf Basis einer dehnfähigen und flammwidrigen Kunststoffolie als legierte Folie auszubilden. Die bakterizide Wirkung einer derartigen legierten Folie beruht auf bakteriziden Stäuben, vorzugsweise Messing- und oder Kupferverbindungen, mit denen die legierte Folie armiert ist. Aufgrund ihrer elastischen Eigenschaften ist die legierte Folie durch Aufweitung an die Innenwandungsfläche des Lüftungskanals bzw. der Abschnitt desselben anlagerbar. Mittels geeigneter Maßnahmen, z.B. Haftmittelbeschichtung od.dgl. auf der Außenfläche der legierten Folie, kann bei der Aufweitung der Folie zwischen der Innenwandungsfläche des Lüftungskanals und der Außenfläche der legierten Folie eine haftende Verbindung hergestellt werden.

Um eine vollständige Bedeckung der Innenwandungsfläche des Lüftungskanals mit der Außenfläche der Faltfolie zu gewährleisten und so Hohlräume zwischen der Faltfolie und der Innenwandungsfläche des Lüftungskanals zu vermeiden, ist es zweckmäßig, Röhrchen zwischen der Innenwandungsfläche des Lüftungskanals und der Außenfläche der Faltfolie anzuordnen. Diese Röhrchen sind an eine Unterdruckpumpe anschließbar. Nach Aufweitung der Faltfolie kann der verbleibende Zwischenraum zwischen der Innenwandungsfläche des Lüftungskanals und der Außenfläche der Faltfolie somit unter Unterdruck gesetzt werden, so daß eine innige und vollständige Haftung und Anlagerung der Faltfolie im Lüftungskanal erzeugt werden kann.

## Patentansprüche

1. Verfahren zur bakteriziden und fungiziden Gestaltung von Lüftungskanälen, dadurch gekennzeichnet, daß die Kanäle mit einer bakteriziden und fungiziden Faltfolie versehen werden und diese Folie nach dem Durchziehen durch einen Kanalabschnitt aufgebläht wird und aufgrund der Haftungsfähigkeit mit der Innenwand des Kanals eine haftende Verbindung eingeht.

2. Verfahren nach Anspruch 1, dadurch gekennzeichnet, daß die Folie als Metallfolie ausgelegt ist.

3. Verfahren nach Anspruch 1 und 2, dadurch gekennzeichnet, daß die Folie als legierte Folie ausgebildet ist, d.h. auf Basis einer dehnfähigen, flammwidrigen Kunststoffolie, die mit bakteriziden Stäuben vorzugsweise Messing- und Kupferverbindungen, armiert ist und aufgrund der elastischen Eigenschaft sich durch Aufblähen an die Wandungen anlagert und eine haftende Verbindung eingeht.

4. Verfahren nach Anspruch 1, dadurch gekennzeichnet, daß nach dem Aufblähen über Vakuumansaugung über Röhrchen und angesetzter Vakuumpumpe, die zwischen der Innenwandung eines stabilen z.B. Klimakanals und der Folie Vakuum saugt, eine noch verbessernde Haftung und Anlagerung bis in die kleinsten Ecken der Kanäle erzeugt wird.

5. Lüftungskanal für Belüftungsanlagen, gekennzeichnet durch eine Faltfolie, die durch den Lüftungskanal oder durch Abschnitte desselben durchziehbar ist, deren Aussenfläche durch Aufweitung der Faltfolie in haftende Verbindung mit der Innenwandungsfläche des Lüftungskanals bzw. der Abschnitte desselben bringbar ist und die zumindest im Bereich ihrer Innenfläche bakterizid und fungizid ausgestaltet ist.

6. Lüftungskanal nach Anspruch 5, bei dem die Faltfolie als Metallfolie ausgebildet ist.

7. Lüftungskanal nach Anspruch 5, bei dem die Faltfolie auf Basis einer dehnfähigen, flammwidrigen Kunststoffolie als legierte Folie ausgebildet ist, die mit bakteriziden Stäuben, vorzugsweise Messing- und/oder Kupferverbindungen armiert, aufgrund ihrer elastischen Eigenschaften durch Aufweitung an die Innenwandungsfläche des Lüftungskanals bzw. der Abschnitte desselben anlagerbar und dort in haftende Verbindung bringbar ist.

8. Lüftungskanal nach einem der Ansprüche 5 bis 7, bei dem zwischen seiner Innenwandungsfläche und der Außenfläche der Faltfolie Röhrchen vorgesehen sind, die an eine Unterdruckpumpe anschließbar sind und mittels denen nach Ausweitung der Faltfolie der verbleibende Zwischenraum zwischen der Innenwandungsfläche des Lüftungskanals und der Außenfläche der Faltfolie unter Unterdruck setzbar ist, so daß eine innige und vollständige Haftung und Anlagerung der Faltfolie im Lüftungskanal erzeugbar ist.

9. Faltfolie für einen Lüftungskanal, die durch den Lüftungskanal oder durch Abschnitte desselben durchziehbar ist, deren Außenfläche durch Aufweitung der Faltfolie in haftende Verbindung mit der Innenwandungsfläche des Lüftungskanals bzw. der Abschnitte desselben bringbar ist und die zumindest im Bereich ihrer Innenfläche bakterizid und fungizid ausgestaltet ist.

10. Faltfolie nach Anspruch 9, die als Metallfolie ausgebildet ist.

11. Faltfolie nach Anspruch 9, die auf Basis einer dehnfähigen, flammwidrigen Kunststoffolie als legierte Folie ausgebildet ist, die mit bakteriziden Stäuben, vorzugsweise Messing- und/oder Kupferverbindungen armiert, aufgrund ihrer elastischen Eigenschaften durch Aufweitung an die Innenwandungsfläche des Lüftungskanals bzw. der Abschnitte desselben anlagerbar und dort in haftende Verbindung bringbar ist.
